# EUROPÄISCHE PATENTANMELDUNG

(11) **EP 0 526 763 A2**
(43) Veröffentlichungstag der Anmeldung: **10.02.1993**
(21) Anmeldenummer: 92111802.2
(22) Anmeldetag: 10.07.1992
(51) Int. Cl.: A01D 34/63, A01D 34/82

(54) **Fahrbarer Rasenmäher**

(30) Priorität: 12.07.1991 DE 4123175; 14.04.1992 EP 92106385
(71) Anmelder: HS Technik und Design Technische Entwicklungen GmbH, D-82234 Wessling (DE)
(72) Erfinder: Specht, Martin, Dipl.-Ing. (FH), W-8133 Feldafing (DE)
(74) Vertreter: Nöth, Heinz, Dipl.-Phys.

(57) **Zusammenfassung**

Ein fahrbarer Rasenmäher weist zusätzlich zu einem Fahrantrieb 102, 117 und einer Schneidvorrichtung 113, 115 ein Dehydratisiergerät 122 zum komprimierenden Mahlen und Aufschließen des Mähgutes unter Abtrennung und Ausscheidung der enthaltenen Flüssigkeit auf. Das aus dem Dehydratisiergerät austretende Restgut kann noch durch eine Streuvorrichtung ausgebreitet werden.

## Beschreibung

Die Erfindung betrifft einen fahrbaren Rasenmäher nach dem Oberbegriff des Patentanspruchs 1. Ein solcher Rasenmäher ist beispielsweise aus der DE 37 29 624 A1 bekannt.

Bei den bekannten Rasenmähern wird das Mähgut entweder ständig in klumpiger Form von dem Mäher ausgeworfen und bleibt liegen bzw. es wird anschließend in einem getrennten Arbeitsgang eingesammelt. Bei dem oft feuchten und in aufgeschütteter Form vorliegenden Mähgut kommt der Rotteprozeß nur sehr schwer in Gang, sodaß das Mähgut in Fäulnis übergeht. Zwar wird die Beigabe des beim Mähen anfallenden Schnittgutes zum allgemeinen Kompost vielfach empfohlen, dabei jedoch in der Regel gleichzeitig auch auf die Notwendigkeit zur Beimischung von auflockernden Anteilen wie beispielsweise von in einem Häcksler zerkleinerten Zweigen aus einem Baumschnitt oder dgl. hingewiesen.

Aufgabe der Erfindung ist es, einen Rasenmäher so auszustatten, daß das Schnittgut bereits während des Mähens umweltschonend entsorgt oder mindestens zur umweltschonenden Entsorgung vorbereitet wird. Diese Aufgabe wird bei einem fahrbaren Rasenmäher der eingangs beschriebenen Art durch das Kennzeichen des Patentanspruchs 1 gelöst.

Hierzu kann ein topfartiges Mähorgan innerhalb eines gleichzeitig als Messergehäuse dienenden Ansaugschachtes für das Schnittgut angeordnet oder - vorzugsweise in unmittelbarer Nachbarschaft zu dem Ansaugschacht - eine Dehydratisierungseinrichtung vorgesehen und zur Aufnahme und Dehydratisierung des Schnittgutes durch ein Auswurfrohr mit dem Ansaugschacht verbunden sein. Auch die Dehydratisiereinrichtung kann durch den Antriebsmotor angetrieben werden. Vorteilhaft hat dabei das Gehäuse der Dehydratisiereinrichtung Austrittsbohrungen, durch die die aus dem Mähgut ausgepreßte Flüssigkeit bereits im unmittelbaren Mähbereich ausscheidbar ist und an Ort und Stelle als Dünger verbleibt.

Insbesondere hat sich gezeigt, daß das Schnittgut bei der Förderung durch die Dehydratisiereinrichtung infolge des starken Zusammenpressens zerkleinert und dabei derart aufgeschlossen wird, daß der Rotteprozeß praktisch unmittelbar nach dem Auswerfen der entwässerten Masse beginnt. Das derart behandelte Schnittgut kann daher beispielsweise auf der abgemähten Oberfläche ausgebreitet werden und - ebenfalls als Dünger - liegen bleiben. In Weiterbildung des Mähgeräts kann zum Zwecke der günstigeren Verteilung des dehydratisierten und aufgebrochenen Schnittguts am Auslaß des Dehydratisiergeräts eine Art Streuvorrichtung vorgesehen werden, die das austretende Gut weiter auflockert und gleichmäßig ausbreitet.

Da das Volumen des Schnittgutes bei dem Dehydratisiervorgang sehr stark verkleinert wird, ist es aber auch möglich, es zunächst beispielsweise in einem Fangkorb zu sammeln uns später zum Kompost zu geben, ohne daß dabei die beim Stand der Technik zu beachtenden Nachteile in Kauf genommen werden müßten.

Das Dehydratisiergeräte ist vorzugsweise eine Schneckenpresse, insbesondere eine solche mit einem vom Schnittguteintritt zum Schnittgutauslaß hin kontinuierlich kleiner werdenden Schneckendurchmesser sowie einem an die Form der Schnecke angepaßten, sich konisch verengenden Schneckengehäuse. Die vorhergehend erwähnte Streuvorrichtung kann dabei vorteilhaft beispielsweise eine in einer horizontalen Ebene umlaufende, abhängig von dem Antrieb des Dehydratisiergeräts angetriebene Streuscheibe sein, auf die das aus dem Schneckengehäuse ausgetretene, durch den Preßvorgang in dem Dehydratisiergerät aufgeschlossene und mit dadurch vergrößerter Oberfläche versehene Schnittgut geleitet und gleichmäßig in der Umgebung des Mähgeräts ausgestreut wird.

Bei einer Ausführungsform der Erfindung ist der mit einem geeigneten Zwischengetriebe ausgestattete Antrieb der Dehydratisierschnecke mit dem Antrieb des Mähorgans starr verbunden. Dabei sollte jedoch eine Möglichkeit, beispielsweise in Form eines Zwischengetriebes, vorgesehen sein, um das Übersetzungsverhältnis vor der jeweiligen Inbetriebnahme des Mähgeräts - beispielsweise abhängig von der Höhe und/oder Dichte des Grases - einzustellen. Als besonders vorteilhaft hat sich demgegenüber eine Getriebeverbindung erwiesen, bei der die Möglichkeit besteht, das Antriebsverhältnis zwischen dem Mähantrieb und dem Antrieb der Dehydratisierschnecke während des Betriebes in relativ weiten Grenzen - abhängig von dem anfallenden Schnittgutdurchsatz - an die Schnittgutmenge anzupassen.

In vorteilhafter Weise kann zwischen der Dehydratisierschnecke und ihrem Antrieb eine Überlastsicherung vorgesehen sein. Diese kann im einfachsten Fall beispielsweise ein einfach zu ersetzender bzw. auszutauschender Scherstift oder eine andere an sich bekannte Sollbruchverbindung sein, durch die eine Beschädigung oder gar Zerstörung der Dehydratisiereinrichtung durch eindringende Steine oder andere Fremdkörper vermieden werden kann. Im Hinblick auf die Wahrung der Betriebsbereitschaft des Mähgeräts kann eine Sicherheitskupplung, beispielsweise eine Rutschkupplung mit einstellbarem Grenzmoment vorgesehen werden. Eine Alarmeinrichtung kann beim Festsitzen oder Klemmen der Schnecke ansprechen.

In Weiterbildung des Mähgeräts ist die Aufhängung der Schneidmesser vorteilhaft derart nachgiebig ausgeführt, daß die rotierenden Messer bei einem Aufprall auf einen festen Körper wegkippen können und, nachdem sie wieder freigegeben wurden, durch Federkraft, beispielsweise durch sog. Schenkelfedern, wieder in Betriebsposition zurückgeführt werden. Dabei soll die Federung jedoch so steif sein, daß die Messer beispielsweise auch bei sehr dichtem Graswuchs sicher in ihrer Arbeitsposition festgehalten bleiben und vorzugsweise nur bei einem sehr harten Anschlag, beispielsweise gegen einen Stein oder einen festen Pflanzenstrunk oder dgl., ausweichen.

Wegen seiner kleinen Bauweise und seiner relativen Schwingungsfreiheit hat sich als Antriebsaggregat ein Kurbelschleifenmotor besonders bewährt.

Das Mähgerät besteht demnach aus einer zentralen Mäh- und Fahreinheit sowie einer Dehydratisiereinrichtung. Die Mäheinheit wird in an sich bekannter Weise durch ein Messergehäuse und einem innerhalb dieses Messergehäuses um eine senkrechte Achse umlaufenden, bevorzugt als Topf ausgebildeten Messerhalter mit in einer senkrecht zur Rotationsachse verlaufenden Ebene liegendem Rand, an dem die Messer befestigt sind, gebildet. Die Mähmesser sind bevorzugt auf der zum Gehäuseinneren weisenden Oberseite des Messerhalterrands befestigt, so daß der Messerhalter bzw. dessen Randunterseite gleichzeitig als wirksamer Auflaufschutz eine gewisse Sicherheit dafür bietet, daß die rotierenden Messer nicht in das Erdreich schlagen können. Bei einer weitergebildeten Ausführungsform kann zusätzlich eine der Innenform des Messerhalters angepaßte, mit dem Gehäuse verbundene und daher nicht mit umlaufende Abdeckglocke in den Messerhalter eingepaßt sein, die dann ihrerseits mit ihrem im wesentlichen parallel zu den Messern verlaufenden Rand die Messerbefestigung nach unten abdeckt und außerdem ihrerseits verhindert, daß die Messer in den Boden schlagen können.

Die Fahreinheit, das Mähwerk und das Dehydratisierwerk sind bei einer besonders bevorzugten Ausführungsform über einzeln zuschaltbare Riementriebe angetrieben. Dabei besteht die Fahreinheit vorzugsweise aus einem verstellbaren Getriebe und den beispielsweise über einen Winkeltrieb mit dem Getriebe in Verbindung stehenden Antriebsrädern. Das Getriebe ist vorteilhaft ein Schneckengetriebe, bei dem die Schneckenwelle zur Schnitthöhenverstellung axial verschiebbar sein sollte. Zur Verstellung der Schnitthöhe befindet sich vorteilhaft an der Oberseite des Rasenmähergehäuses ein Einstellgriff oder dgl.

Das Schnittgut verläßt das Messergehäuse durch ein Auswurfrohr, welches im Bereich des Außenumfangs des Messergehäuses auf dessen Oberseite mit strömungsgünstigen Übergängen ohne tote Ecken angesetzt ist und zu dem Dehydratisierwerk führt. Das anfallende Schnittgut wird durch das Auswurfrohr zum Dehydratisierwerk transportiert und dort durch die bereits erwähnte, beispielsweise über ein Winkelgetriebe angetriebene Schnecke gemahlen und verdichtet und dabei gründlich aufgeschlossen, wobei sich die Oberfläche des Schnittgutes erheblich vergrößert, so daß der Rotteprozeß entsprechend beschleunigt einsetzen und ablaufen kann. Die Flüssigkeitsbestandteile des schnittgutes werden bei der Verdichtung ausgepreßt und können durch vorzugsweise besonders in dem in der Nähe des Auslasses des Dehydratisiergeräts liegenden Bereich vorgesehene Bohrungen nach unten austreten.

Bei einer weiteren Ausführungsform wird ferner eine Verbesserung der Laufruhe und eine verbesserte Lenk- bzw. Führungsmöglichkeit des Rasenmähers erreicht. Auch kann der Rasenmäher als Ersatz für eine Kehrmaschine oder einen Hächsler eingesetzt werden, wobei die jeweilige Umrüstung in einfacher Weise ausführbar ist. Das Reinigen und Warten des Rasenmähers ist außerdem erleichtert. Hierzu kann der Rahmen des Rasenmähers eine in der Draufsicht T-förmige Grundrißform aufweisen und durch ein selbsttragend gestaltetes Gehäuse gebildet sein, welches in seinem längsgerichteten Schenkel die Lagerung und die Kraftübertragung für das Schneidorgan und mit seinen beiden quergerichteten Schenkeln wenigstens zum Teil die Hinterachsträger bildet, wobei im Kreuzungsbereich seiner Schenkel wenigstens teilweise der Antriebsmotor untergebracht ist. Die Ausbildung des Rahmens als selbsttragendes Gehäuse ermöglicht zum einen neben einer staub- und schmutzgeschützten Unterbringung des Antriebs für das Schneidorgan eine vereinfachte Herstellung und Montage sowohl des Schneidorganes als auch seines Antriebes und gewährleistet darüberhinaus eine weitgehend geräuschgedämpfte Unterbringung des Antriebsaggregates. Ein weiterer aus der selbsttragenden Ausbildung des Gehäuses resultierender Vorteil ist in der vereinfachten Anschlußmöglichkeit für Anbauteile, wie Grasfangkasten oder Zerkleinerungseinheit oder ggl. zu sehen. Ferner kann das selbsttragende Gehäuse an der freien Rückseite seiner quergerichteten Schenkel mit Einrichtungen zum Anschluß wenigstens über einen Teil der Spurbreite des Rasenmähers hinreichender Einrichtungen zur Aufnahme und/oder Behandlung des Mähgutes, wie Grasfangeinrichtungen, Hächselwerk oder dgl., versehen sein. Das selbstragende Gehäuse kann von einer haubenartigen Verkleidung übergriffen sein, welche vorderendig das bevorzugt glockenförmig ausgebildete Schneidorgan über- und umgreift und zusammenmit dem längsgerichteten Schenkel des selbsttragenden Gehäuses einen über die Hinterachse hinwegführenden Förderkanal für das Mähgut bildet. Die Antriebsübertragung vom Motor zum Schneidorgan kann durch einen Keilriementrieb gebildet sein, welcher abtriebsseitig eine vermittels einer umfangsverzahnten und im Gehäuse gelagerten Keilwellenhülse mit dem Schneidorgan drehsicher verbundene Riemenscheibe umfaßt.

Der Übergang des längsgerichteten Schenkels des selbsttragenden Gehäuses zu dessen beiden quergerichteten Schenkeln kann bogenförmig gestaltet sein, und in der dadurch gebildeten zentralen Erweiterung des selbsttragenden Gehäuses können der insbesondere durch einen geräuscharm laufenden Zweitakt-Sternmotor gebildete Antriebsmotor samt Kühlgebläse, Abgasanlage und unterseitig an ihn angeschlossenem Abtriebsgetriebe sowie Radantrieb der Hinterräder angeordnet sein, wobei der Brenn- und Kühllufteinlaß im einen der quergerichteten Schenkel des selbsttragenden Gehäuses angeordnet sein kann.

Das Riemenrad für den Antrieb des Mähorgans kann oberhalb des Gebläserades angeordnet sein, wodurch der längsgerichtete Schenkel des selbstragenden Gehäuses bei geringer Bauhöhe obenliegend an die eine größere Bauhöhe aufweisenden quergerichteten Schenkel des selbsttragenden Gehäuses angeschlossen sein kann. Ferner kann der Treibstoffbehälter an die hintere Querwandung der quergerichteten Schenkel des selbsttragenden Gehäuses angeschlossen sein.

Das Vorderrad kann als Lenkrolle und vermittels eines Joches schwenkbar sein. Gegenüber der vertikalen Achse des Joches kann das Vorderrad vor- oder nachlaufend an einen Stehbolzen angeschlossen sein. Der Stehbolzen ist zur Rotationsachse des glockenförmigen Schneidorgans, welche mit der vertikalen Achse des Joches zusammenfällt, konzentrisch angeordnet und bildet gleichzeitig die Abstandshalterung und Vorspannung der Verkleidung zum längsgerichtetetn Schenkel des selbsttragenden Gehäuses. Der Stehbolzen durchsetzt die Keilwellenhülse und trägt an seinem freien oberen Ende einen manuell betätigbaren Schnellverschluß, derart, daß durch Lösen des Schnellverschlusses einerseits die Verkleidung vom selbsttragenden Gehäuse gelöst und andererseits zusammmen mit dem Vorderrad und dessen Aufhängung auch das Schneidorgan abgenommen werden kann. Der Stehbolzen weist im Bereich seines unteren Endes einen ersten Bund, über den er an der Unterseite des kastenförmig ausgebildeten längsgerichteten Schenkels des selbsttragenden Gehäuses anliegt und im Bereich seines oberen Endes einen weiteren Bund auf, welcher die Abstützung für die Verkleidung bildet.

Ein Hand-Führungsbügel kann an die beiden quergerichteten Schenkel des T-förmigen selbsttragenden Gehäuses angeschlossen sein, wobei die Hinterräder durch kotflügelartige Abdeckhauben übergriffen sind.

Zur Erzeugung eines für die Abförderung des Mähgutes aus dem Schnittbereich des Schneidorganes ausreichenden Förderluftstromes kann das glockenförmige Schneidorgan an seiner Oberseite mit Gebläseschaufeln bildenden Rippen versehen sein. Ferner können die Schneidmesser an radial gerichteten Verlängerungen der Verrippung des glockenförmigen Schneidorganes befestigt sein.

Der Auslaßöffnung des Förderkanals kann die Dehydratisierungseinrichtung mit einer Einrichtung zur Zerkleinerung des Mähgutes nachgeschaltet sein.

Die Hehydratisierungseinrichtung kann einen an die Mündung des Förderkanals anschließenden Einlauftrichter und, diesem nachgeschaltet, eine eine drehangetriebene Presschnecke aufnehmende, wenigstens über einen Teil ihres Umfanges hin mit Flüssigkeitsauslaßöffnungen versehene Presstrommel aufweisen. Die aus Presstrommel und Presschnecke sowie zugehörigem Traggehäuse gebildete Einheit kann quer zur Fahrtrichtung des Rasenmähers ausgerichtet sein. Ferner kann der Antrieb der Presschnecke durch eine lösbare Antriebsverbindung vom Antriebsmotor des Rasenmähers, insbesondere vermittels eines Keilriementriebes vom Hinterradantrieb des Rasenmähers abgeleitet werden.

Die Presstrommel kann stirnseitig mit einer oder mehreren Austrittsöffnungen für das entsaftete Mähgut versehen sein.

Die Anwendung einer das Mähgut entsaftenden und dabei zugleich auch die verbleibenden festen Rückstände wenigstens in einem gewissen Umfang pressenden Einrichtung ermöglicht es das Volumen des anfallenden Mähgutes un einen sehr großen Betrag, etwa bis zu 90%, zu verringern, derart, daß der verbleibende weitgehend trockene Rest entweder problemlos und ohne großen Arbeitsaufwand über die allgemeine Abfallentsorgung oder aber völlig getrocknet dem Boden wieder zurückgegeben werden kann.

Der durch Presschnecke und Presstrommel gebildeten Dehydratisiereinheit kann eine insbesondere als selbstständige Baugruppe ausgebildete Zerkleinerungseinheit, insbesondere ein Häckselwerk, vor- oder nachgeschaltet sein. Die Häckseleinheit kann einen an den Auslaß des Förderkanals für des Mähgut anschließenden Einlauftrichter, einen Häckselflügel und einen Anschluß für die Entsaftungseinheit aufweisen. Der Häckselflügel kann auf einer in einem mit Schnellverschlüssen zum Anschluß an das selbsttragende Gehäuse versehene Gehäuse gelagerten Welle umlaufend angetrieben sein.Zweckmäßiger Weise ist dabei die antreibbare Presschnecke vermittels einer drehsicheren Steckkupplung mit den umlaufenden Häckselflügeln der Zerkleinerungseinheit koppelbar, so daß für beide Geräte lediglich ein Antrieb erforderlich ist.

Die Anordnung einer als eigenständige Anbaueinrichtung ausgebildeten Zerkleinerungseinheit ermöglicht die Verwendung des Rasenmähers als Häcksler für Gartenabfälle wie Laub oder Zweige, so daß der Rasenmäher gleichzeitig auch den bisher als eigenständige Einrichtung anzuschaffenden Häcksler ersetzen kann, wobei als besonderer Vorteil noch hinzukommt, daß der mit dem Rasenmäher kombinierte Häcksler ortsbeweglich einsetzbar ist, da er im Unterschied zu den üblichen Gartenhäckslern auf keine Stromzufuhr angewiesen ist, also Kabelverbindungen und dergl. überflüssig sind.

Eine weitere Einsatzmöglichkeit für den Rasenmäher eröffnet sich dadurch, daß das glockenförmige Schneidorgan gegen ein entsprechend glokkenförmiges Kehrorgan austauschbar ist und daß ein Grasfangbehälter gegen einen Schmutzsammelbehälter austauschbar ist, wobei alternativ aber auch vorgesehen sein kann, daß in Verbindung mit einem Austausch des Schneidorganes gegen ein Kehrorgan eine seitliche Ausleitung an den Förderkanal anschließbar ist.

Bei entsprechender Umrüstung des im Austausch gegen das Schneidorgan einzusetzenden Kehrorganes kann der Rasenmäher ferner auch zum Schneeräumen eingesetzt werden, wobei dann an den Förderkanal zweckmäßigerweise eine nach oben gerichtete Ausblasleitung angeschlossen wird.

Anhand der Zeichnung wird die Erfindung bei Ausführungsbeispielen erläutert. Es zeigen:
Fig. 1 einen Längsschnitt durch ein Ausführungsbeispiel;
Fig. 2 eine Draufsicht auf das Mähgerät der Fig. 1 mit teilweise entfernter Abdekkung;
Fig. 3 eine Seitenansicht des Mähgerätes der Fig. 1 mit Blick auf das Auswurfrohr und das Dehydratisierwerk bei teilweise aufgeschnittenem Gehäuse;
Fig. 4 einen Schnitt 4-4 gemäß Fig. 1;
Fig. 5 einen Längsschnitt durch das Dehydratisierwerk;
Fig. 6 einen Schnitt 6-6 gemäß Fig. 5;
Fig. 7 eine teilweise aufgebrochene schaubildliche Darstellung eines weiteren Ausführungsbeispiels eines Rasenmähers;
Fig. 8 einen Längsschnitt durch den Rasenmäher nach Fig. 7 in Explosionsdarstellung;
Fig. 9 eine schaubildliche Darstellung des als selbsttragendes Gehäuse ausgebildeten Rahmens des Rasenmähers der Fig. 7 und 8;
Fig. 10 einen Schnitt durch die als selbstständige Anbaueinheiten ausgebildete Zerkleinerungs einrichtung; und
Fig. 11 einen Schnitt durch eine gegebenenfalls als selbstständige Anbaueinheiten ausgebildete Dehydratisierungseinrichtung.

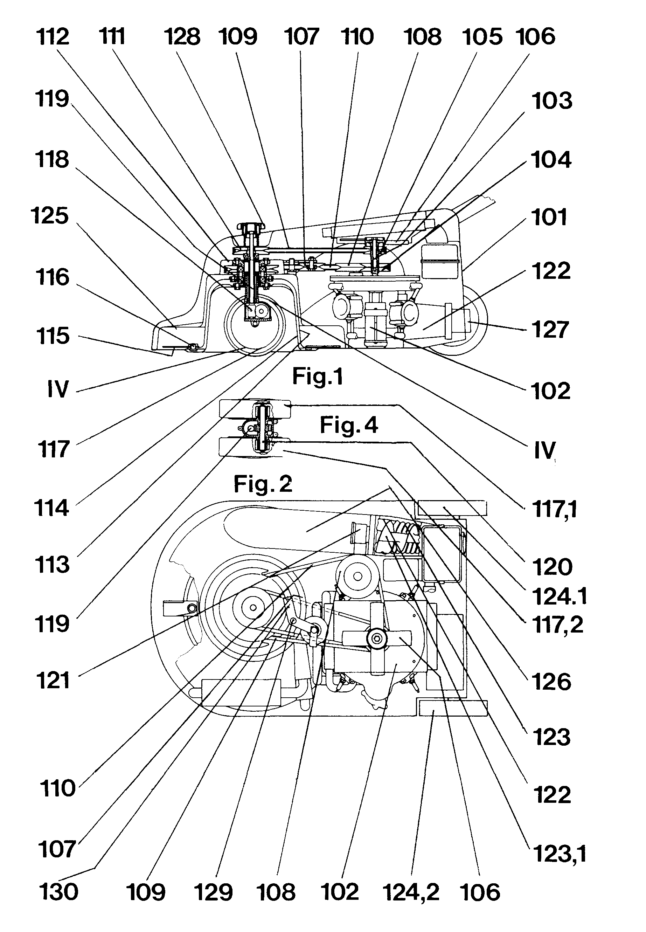

Der allgemeine Aufbau eines Ausführungsbeispiels wird nachfolgend anhand der Figuren 1 bis 3 beschrieben. Alle betriebswichtigen Teile des Mähgerätes sind durch eine Abdeckhaube 101 abgedeckt, aus der im vorderen Teil nach oben nur der Stellgriff 128 für die Einstellung der Mähhöhe herausragt. Unter der Abdeckhaube 101 befindet sich im vorderen Teil des Mähgerätes das aus einem glockenförmigen Messerhalter 113, den Messern 115 mit Befestigungen 116 sowie Messergehäuse 125 bestehende Mähwerk mit dem innerhalb des Messerhalters 113 vorgesehenen Fahrantrieb 117 - 119, dahinter das Antriebsaggregat 102 sowie das Dehydratisiergerät 122,123 mit dem vorgeschalteten Getriebeblock 121 und dem Auslaß 127.

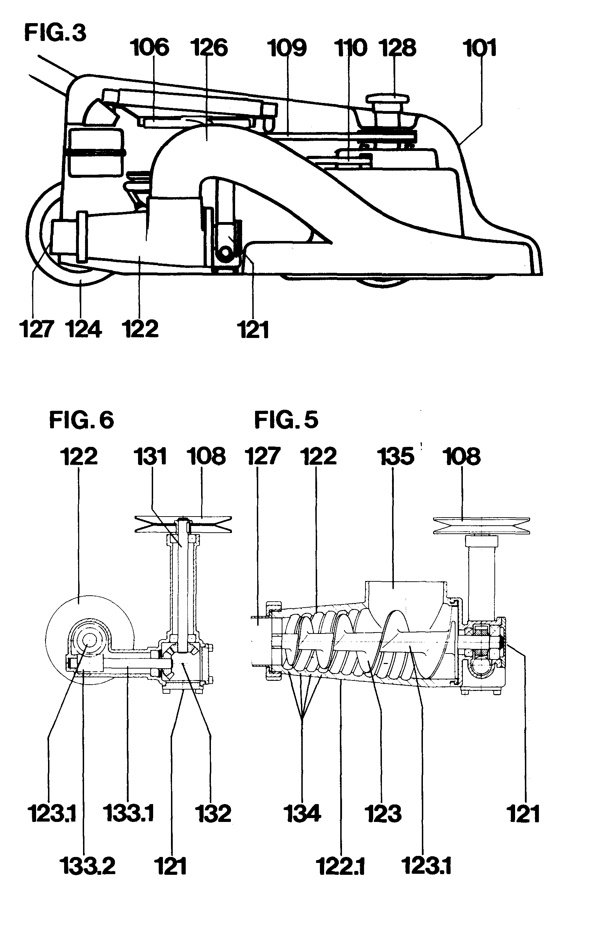

Das Dehydratisiergerät 122, 123 kann eine Schneckenpresse mit einem vom Schnittguteintritt 133 zum Schnittgutauslaß 127 hin sich konisch verengenden Schneckengehäuse 122 sowie einer in das Schneckengehäuse 122 eingepaßten konisch zulaufenden Schnecke 123 sein (Figur 5).

Der Antrieb 129 - 131 des Dehydratisiergerätes 122, 123 kann mit dem Antrieb 112 des Mähorgans 113,115 starr, jedoch vor Inbetriebnahme einstellbar gekoppelt sein. Das Antriebsverhältnis zwischen Mähantrieb 113, 115 und Antrieb 108, 121 des Dehydratisiergeräts 122, 123 kann abhängig von dem anfallenden Schnittgutdurchsatz während des Betriebs veränderbar sein. Zwischen der Riemenscheibe 108 des Antriebs 108, 121 und der Antriebswelle 129 des Dehydratisiergeräts 122, 123 kann eine Überlastkupplung insbesondere in Form einer Rutschkupplung angeordnet sein.

In unmittelbarer Nachbarschaft zu dem als Ansaugschacht wirkenden Messergehäuse 125 kann die Dehydratisiereinrichtung 122,123 vorgesehen sein, welche zur Aufnahme und Dehydratisierung des Schnittgutes über ein Auswurfrohr 126 mit dem Ansaugschacht 125 verbunden ist.

Das Dehydratisiergerät 122, 123 ist über das Auswurfrohr 126 mit dem Messergehäuse 125 verbunden. Während des Betriebs wird das anfallende Schnittgut durch den von den nach Art von Ventilatorflügeln eines Axialventilators wenigstens auf einen Teil ihrer Länge angestellten Messern 125 erzeugten Luftstrom zu der Dehydratisierungseinrichtung 122, 123 und in den Einfülltrichter 135 des Gehäuses 122 gefördert. Das Gehäuse 122 wirkt somit als Druckgehäuse, in welchem ein bestimmter Förderdruck für das Mähgut aufgebaut wird.

Das in die Dehydratisierungseinrichtung eingefüllte Schnittgut wird durch eine Schnecke 123 gemahlen und verdichtet und dabei gründlich aufgeschlossen. Dabei wird seine Oberfläche erheblich vergrößert, so daß der Rotteprozeß entsprechend beschleunigt einsetzt und abläuft. Die Flüssigkeitsbestandteile des Schnittgutes werden bei der Verdichtung ausgepreßt und können durch vorzugsweise besonders in dem in der Nähe des Auslasses 27 des Dehydratisiergeräts 122, 123 liegenden Bereich 122.1 vorgesehene Bohrungen 134 nach unten austreten. Zum Abtrennen des Schnittgutes vom Förderluftstrom sind vorteilhaft in dem Bereich vor der Einfüllöffnung des Dehydratisierungszylinders durch geeignete Filter abgedeckte Auslässe (nicht dargestellt) vorgesehen.

Die Dehydratisierungseinrichtung 122, 123 und das Mähorgan 113, 115 einerseits sowie die Vorderradanordnung 117 - 120 andererseits sind durch den Antriebsmotor 102 angetrieben, und das aufgeschlossene dehydratisierte Schnittgut kann beim Auswurf aus der Dehydratisierungseinrichtung 122, 123 vorzugsweise aufgelockert und ausgebreitet werden, wie noch erläutert wird.

Die Fahreinheit ist mit dem Mähwerk in nachfolgend beschriebener Weise zusammengefaßt.

Das Mähwerk beinhaltet das Messergehäuse 125 und den topfförmigen Messerhalter 113 mit den Messern 115. Bei der dargestellten Ausführungsform ist zusätzlich eine der Innenform des Messerhalters 113 angepaßte, nicht mitrotierende Abdeckglocke 114 in den Messerhalter 114 eingesetzt. Sie deckt im mit ihren im wesentlichen parallel zu den Messern 115 verlaufenden Rand die Messerbefestigung 116 nach unten ab und verhindert außerdem, daß die Messer 115 in den Boden schlagen können. Im hinteren Teil des Mähgerätes ist das Antriebsaggragat 102 und außerdem das bereits erwähnte Dehydratisiergerät 122, 123 angeordnet. Bei der dargestellten Ausführung ist als Antrieb ein Kurbelschleifenmotor vorgesehen. Auf der Antriebswelle 103 des Antriebsaggregats 102 sind neben dem zur Kühlung vorgesehenen Lüfter 106 zwei Riemenscheiben 104 und 105 mit axialem Abstand zwischen sich aufgesetzt. Die obere Riemenscheibe 105 dient dem Fahrbetrieb und ist über einen Keilriemen 109 mit einer weiteren Riemenscheibe 111 kraftschlüssig verbunden, die ihrerseits die Schneckenwelle 119 antreibt. Diese treibt über ein Schneckengetriebe 118 die beiden über eine gemeinsame Achse 120 miteinander verbundenen Antriebsräder 117.1. und 117.2 (Fig. 4) an.

Die Einstellung der Schnitthöhe erfolgt dadurch, daß mit der durch den Handgriff 128 axial verschiebbaren Schneckenwelle 119 der gesamte Antrieb 117-120 innerhalb des Messerhalters 113 verschiebbar ist. Der Messerhalter 113 ist ebenso wie die Abdeckglocke 114 und die Riemenscheibe 111 gegenüber dem Gehäuse 101 des Mähgerätes bzw. dem Messergehäuse 125 nicht verschiebbar. Die Schneckenwelle 119 ist daher mit der Riemenscheibe 111 beispielsweise über eine Keilverbindung (beispielsweise Paßfeder; nicht dargestellt) derart verbunden, daß die Schneckenwelle 119 in der Riemenscheibe 111 axial bewegbar ist.

Die weitere auf der Antriebswelle 103 des Antriebsaggregats 102 sitzende Riemenscheibe 104 dient sowohl dem Antrieb des Messerhalters 113 als auch dem Antrieb des Dehydratisiergerätes 122, 123, der über das aus der Antriebswelle 131, dem Winkelgetriebe 132 und dem Schneckentrieb aus Schneckenwelle 133.1 und Schneckenrad 133.2 bestehenden Getriebe 121 erfolgt (Fig. 6). Hierzu wird der Riemen 110 über eine dem Antrieb des Hydratisiergerätes 122, 123 dienende Riemenscheibe 108 und von dort zu der den Messerhalter 113 in Rotation versetzenden Riemenscheibe 112 geführt. Eine durch eine Feder 136 belastete, an einem um die Schwenkachse 129 schwenkbaren zweiarmigen Hebel 130 befestigte Spannrolle 107 dient dazu, den Riemen 109 unter Spannung zu halten.

Die Aufhängung der Schneidmesser 115 kann derart nachgiebig ausgeführt sein, daß die rotierenden Messer 115 bei einem Aufprall auf einen festen Körper wegkippen können und durch Schenkelfedern 116 wieder in Betriebsposition zurückführbar sind. Es ist auch möglich, im Transportweg des Mähgutes vor dem Dehydratisiergerät eine Hartkörper-Abweiseeinrichtung, die beispielsweise durch das in Transportrichtung ansteigende Auswurfrohr 26 verwirklicht wird, vorzusehen. Das Auswurfrohr 26 kann hierfür auch auswechselbar sein.

Das beschriebene Mähgerät ist noch wie folgt ausbaubar. So kann es beispielsweise - in der beschriebenen Form oder ggf. nach Austausch des Messerhalters 113 samt Messern gegen ein Turbinenrad - etwa im Spätherbst zur Aufnahme und zum komprimierenden Aufschließen von Fallaub im Dehydratisiergerät oder auch bei entsprechendem Austausch des Messerhalters und abgeschaltetem und abgesperrtem Dehydratisiergerät als Kehrmaschine dienen, wobei im letzteren Fall das Auswurfrohr 126 mit einem entsprechend ausgestatteten Sammelgefäß (Sack) verbunden werden kann.

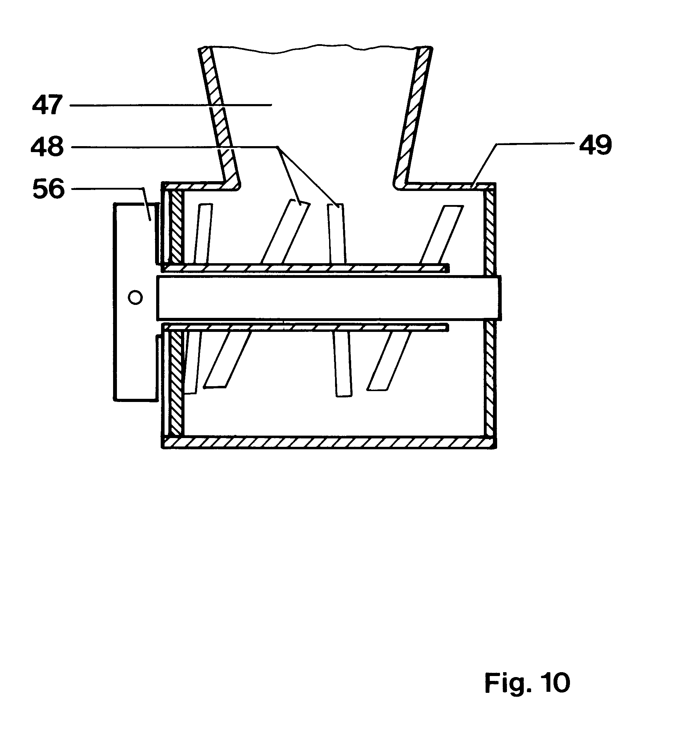

Das aus dem Dehydratisiergerät 122, 123 austretende Mähgut kann durch eine Streueinrichtung, z.B. einer Streuscheibe oder einem mit hoher Drehzahl umlaufenden Rechen ausgebreitet werden. Vorher kann noch eine Vereinzelung bzw. eine Zerkleinerung, beispielsweise mit Hilfe eines Häckslers (Fig. 10), erfolgen.

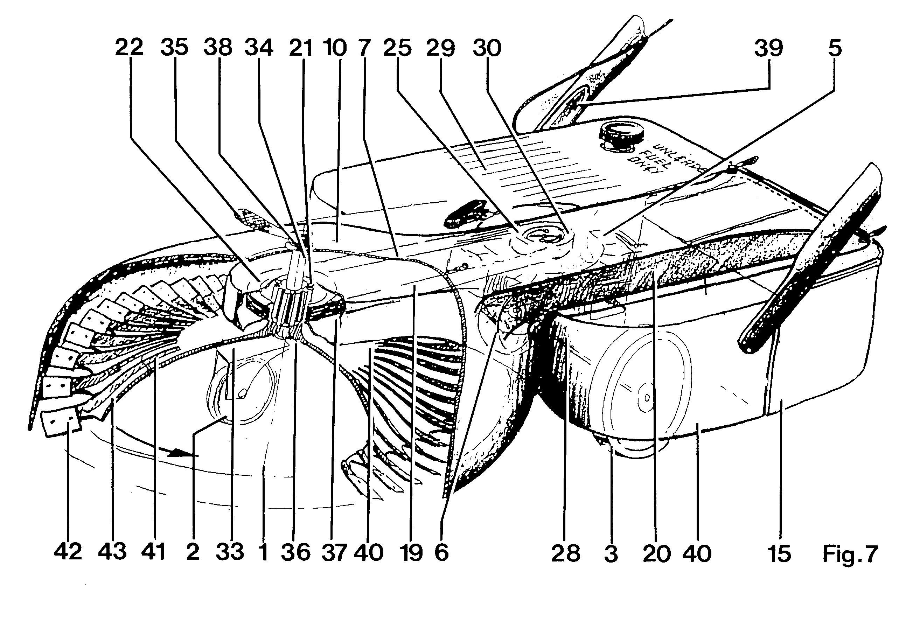

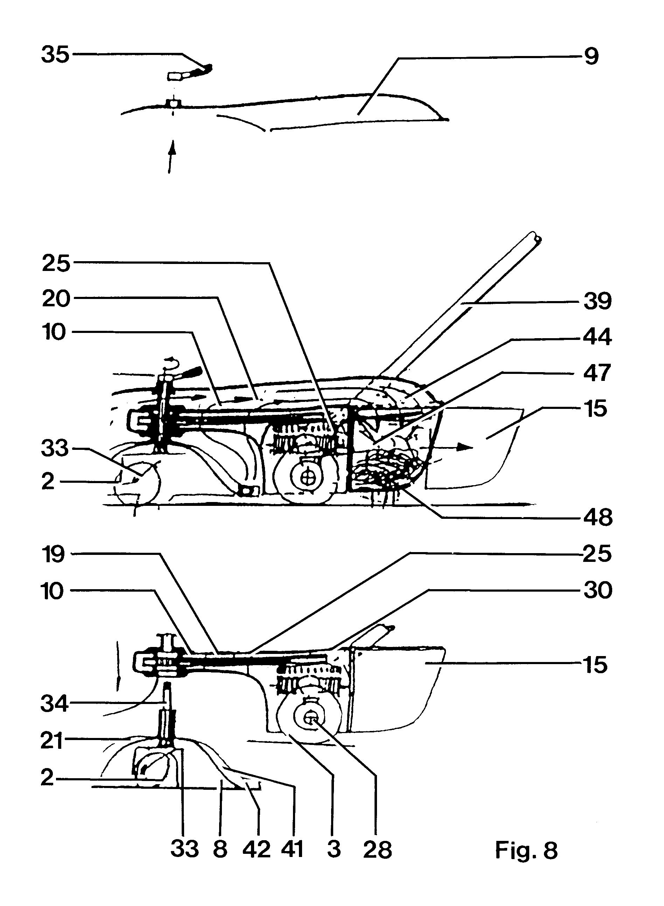

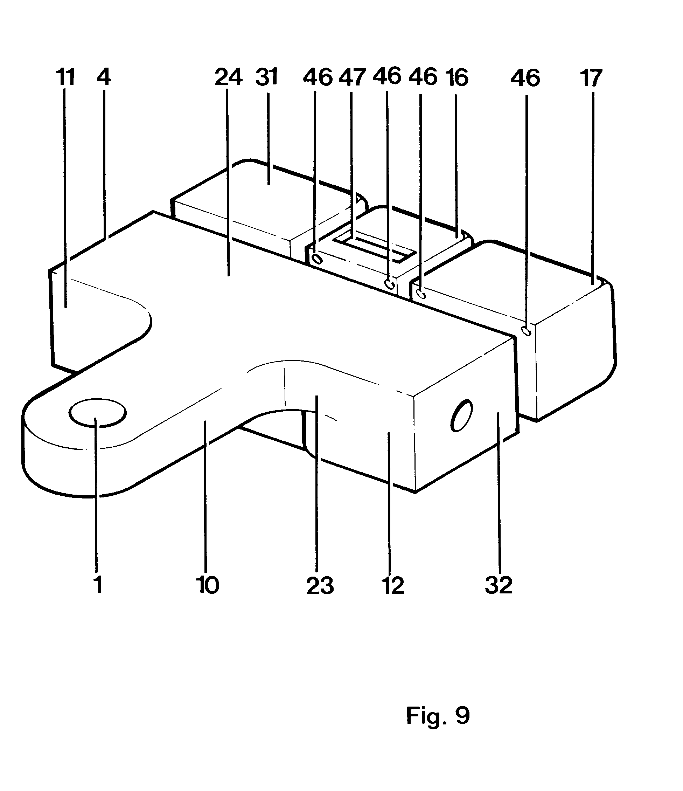

Ein in den Figuren 7 bis 9 dargestellter fahrbarer Rasenmäher weist einen über ein um eine vertikale Achse 1 drehbar aufgehängtes Vorderrad 2 und zwei an einer starren Hinterachse gelagerten Hinterräder 3 an einem gegen den Boden abgestützten Rahmen 4 auf. Am Rahmen sind ein Antriebsmotor 5 samt Getriebe 6 und Kraftübertragungseinheiten 7, sowie ein um eine zur Achse 1 der Vorderradaufhängung konzentrische Achse rotierendes, glockenförmiges Schneidorgan 8, eine Verkleidung 9 und eine Einrichtung zur Aufnahme und/- oder Behandlung des Mähgutes sowie eine Führungseinrichtung angeordnet. Der Rahmen 4 ist als selbsttragendes Gehäuse mit in der Draufsicht T-förmiger Grundrißform ausgebildet und weist einen längsgerichteten Schenkel 10 sowie zwei quergerichtete Schenkel 11 und 12 auf. An der freien Rückseite 13 der quergerichteten Schenkel 11 und 12 können Einrichtungen, insbesondere Schnellverschlüsse 14, zum Anschluß wenigstens über einen Teil der Spurbreite des Rasenmähers hin reichender Einrichtungen zur Aufnahme und/oder Behandlung des Mähgutes, wie Grasfangeinrichtung 15, Häckselwerk 16 oder dergl. 17, vorgesehen sein. Das selbsttragende Gehäuse 4 kann von einer haubenartigen Verkleidung 9 übergriffen sein, welche mit ihrem vorderen Endbereich 18 das glockenförmige Schneidorgan 8 über- und umgreift und welche zusammen mit dem längsgerichteten Schenkel 10 des selbsttragenden Gehäuses 4 einen über die Hinterachse hinwegführenden Förderkanal 20 für das Mähgut bildet.

Die Antriebsübertragung vom Motor 5 zum glockenförmigen Schneidorgan 8 ist durch einen Keilriementrieb 19 gebildet, welcher abtriebsseitig eine vermittels einer umfangsverzahnten und im Gehäuse 4 gelagerten Keilwellenhülse 21 mit dem Schneidorgan 8 drehsicher verbundene Riemenscheibe 22 umfaßt. Der Übergangsbereich des längsgerichteten Schenkels 10 des selbsttragenden Gehäuses 4 zu dessen beiden quergerichteten Schenkeln 11 und 12 ist bogenförmig (bei 23) gestaltet. In der dadurch gebildeten zentralen Erweiterung 24 des selbsttragenden Gehäuses 4 ist ein z.B. als Zweitakt-Sternmotor ausgebildeter Antriebsmotor 5 samt Kühlgebläse 25, Abgasanlage 26 und unterseitig an ihn angeschlossenem Abtriebsgetriebe 6, sowie Radantrieb 28 der Hinterräder untergebracht. Ein Brenn- und Kühllufteinlaß 29 kann in einem der quergerichteten Schenkel, z.B. dem Schenkel 11, des selbsttragenden Gehäuses 4 angeordnet sein. Das motorseitige Riemenrad 30 für den Antrieb des Schneidorgans 8 ist oberhalb des Gebläserades 25 angeordnet. Der längsgerichtete Schenkel 10 des selbsttragenden Gehäuses 4 besitzt eine geringere Bauhöhe als die quergerichteten Schenkel 11 und 12 des selbsttragenden Gehäuses 4 und ist als auskragender Träger obenliegend an diese angeschlossen. Ein Treibstoffbehälter 31 ist an die hintere Querwandung 32 des quergerichteten Schenkels 11 des selbsttragenden Gehäuses 4 angeschlossen. Das Vorderrad 2 ist als Lenkrolle ausgebildet und vermittels eines Joches 33 schwenkbar. Das Vorderrad kann gegenüber der vertikalen Achse 1 des Joches 33 vor-oder nachlaufend an einem zur Rotationsachse des glockenförmigen Schneidorganes 8, welche mit der vertikalen Achse 1 des Joches zusammenfällt, konzentrisch angeordneten Stehbolzen 34 angeschlossen sein. Der Stehbolzen 34 durchsetzt die Keilwellenhülse 22 und weist an seinem freien oberen Ende einen manuell betätigbaren Schnellverschluß 35 und im Bereich seines unteren Endes einen ersten Bund 36, über den er an der Unterseite 37 des kastenförmig ausgebildeten, längsgerichteten Schenkels 10 des selbsttragenden Gehäuses 4 anliegt sowie im Bereich seines oberen Endes einen weiteren Bund 38 auf, welcher die Abstützung für die Verkleidung 9 bildet.

Der Hand-Führungsbügel 39 ist an die beiden quergerichteten Schenkel 11 und 12 des T-förmigen selbsttragenden Gehäuses 4 angeschlossen. Die Hinterräder 3 sind durch kotflügelartige Abdeckhauben 40 übergriffen.

Das glockenförmige Schneidorgan 8 ist als Formteil ausgebildet und an seiner Oberseite 40 mit Gebläseschaufeln bildenden Rippen 41 versehen, wobei die Schneidmesser 42 an radial gerichteten Verlängerungen 43 der Verrippung 41 befestigt sind. Hierdurch kann im Förderkanal 20 (Verkleidung 9) der erforderliche Förderdruck aufgebaut werden.

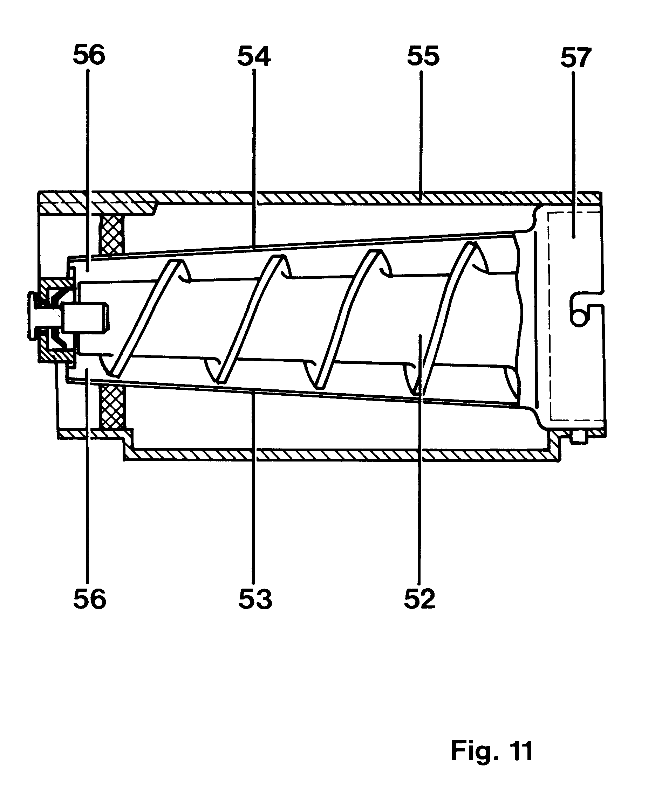

Der Auslaßöffnung 44 des Förderkanals 20 ist ein Häcksler 16 zur Zerkleinerung des Mähgutes nachgeschaltet und mittels Schnellverschluß 46 an der hinteren Wandung 32 des Gehäuses 4 lösbar befestigt. Der Häcksler 16 (Fig. 10) weist einen Einlauftrichter 47 und ein Häckselwerk auf, welches auf einer in einem Gehäuse 49 gelagerten Welle umlaufende, angetriebene Häckselflügel 48 und einen Anschluß 50 für eine nachschaltbare Dehydratisierungseinrichtung 17 aufweist. Die Dehydratisierungseinrichtung 17 weist eine eine drehangetriebene Preßschnecke 52 aufnehmende, wenigstens über einen Teil ihres Umfanges hin mit Saftauslaß- öffnungen 53 versehene Preßtrommel 54 auf und ist in quer zur Fahrtrichtung des Rasenmähers ausgerichteter Lage in einem an der hinteren Querwand 32 befestigbaren Traggehäuse 55 gelagert (Fig. 11). Die Preßtrommel 54 ist stirnseitig mit einer oder mehreren Austrittsöffnungen 56 für das entwässerte Mähgut versehen. Bei der dargestellten nebeneinander liegenden Anordung von Zerkleinerungseinheit 16 und Dehydratisiereinheit 17 ist der Antrieb der Preßschnecke 52 vermittels einer drehsicheren Steckkupplung 56/57 von der angetriebenen Traghülse für die Häckselflügel der Zerkleinerungseinheit abgeleitet. Der Antrieb der Preßschnecke 52 kann aber auch durch eine nicht dargestellte, lösbare Antriebsverbindung vom Antriebsmotor 5 des Rasenmähers, insbesondere vermittels eines Keilriementriebes vom Hinterradantrieb des Rasenmähers abgeleitet sein. Ferner kann die Zerkleinerungseinheit (Häcksler) sich auch an den Auslaß der Dehydratisierungseinrichtung 17 anschließen oder mit dieser eine Baueinheit bilden.

## Patentansprüche

1. Fahrbarer Rasenmäher mit einem an mehreren Rädern gelagerten Rahmen, einer am Rahmen gelagerten Antriebseinheit, enthaltend einen Antriebsmotor und Kraftübertragungseinrichtungen, einer Schneideinrichtung und einer Führungseinrichtung zum Weiterleiten von Mähgut von der Schneideinrichtung zu einem Mähgutauslaß,
dadurch gekennzeichnet,
daß nach der Schneideinrichtung (8,41-43;113,115,116) eine Dehydratisierungseinrichtung (17;122,123) für das Mähgut am Rahmen vorgesehen ist, in welcher auf das Mähgut zum Auspressen von Flüssigkeit ein mechanischer Druck ausgeübt wird.

2. Fahrbarer Rasenmäher nach Anspruch 1, dadurch gekennzeichnet, daß zur Erzeugung des mechanischen Druckes die Dehydratisierungseinrichtung (17;122,123) von der Antriebseinrichtung (5;102) antreibbar ist.

3. Fahrbarer Rasenmäher nach Anspruch 1 oder 2, dadurch gekennzeichnet, daß die Dehydratisierungseinrichtung (17;122,123) als Schnekkenpresse (52,54; 122,123) ausgebildet ist.

4. Fahrbarer Rasenmäher nach einem der Ansprüche 1 bis 3, dadurch gekennzeichnet, daß die Schneideinrichtung (8,41-43;113,115,116) einen mit Messern (42;115) bestückten, von Antriebseinheit (5;102) angetriebenen Rotor (41,43;113) aufweist, der bei seiner Drehung einen das Mähgut transportierenden Förderdruck ausübt.

5. Fahrbarer Rasenmäher nach einem der Ansprüche 1 bis 4, dadurch gekennzeichnet, daß in der Förderstrecke des Mähgutes von der Schneideinrichtung (8,41-43;113,115,116) zur Dehydratisierungseinrichtung (17;122,123), in welcher der vom Rotor (41,43; 113) erzeugte Förderdruck wirkt, Hartkörperabweiseeinrichtungen vorgesehen sind.

6. Fahrbarer Rasenmäher nach Anspruch 4 oder 5, dadurch gekennzeichnet, daß der mit den Messern (42; 115) bestückte Rotor (41,43;113) von einem Gehäuse (9;125) umfaßt ist, in welchem der Förderdruck erzeugt wird.

7. Fahrbarer Rasenmäher nach einem der Ansprüche 1 bis 6, dadurch gekennzeichnet, daß an die Ausgangsseite der Dehydratisierungseinrichtung (17;122,123) eine Vorrichtung zum Auflockern und Ausstreuen des entfeuchteten Mähgutes angeschlossen ist.

8. Fahrbarer Rasenäher nach Anspruch 7, dadurch gekennzeichnet, daß die Vorrichtung zum Auflockern und Ausstreuen des entfeuchteten Mähgutes durch die Antriebseinrichtung (5;102) mitangetrieben ist.

9. Fahrbarer Rasenmäher nach einem der Ansprüche 1 bis 8, dadurch gekennzeichnet, daß der Rotor (41,43; 113) glockenförmig ausgebildet ist und seine vertikale Drehachse (1) mit einer vertikalen Schwenkachse zusammenfällt, um die die als Antriebsräder ausgebildeten Vorderräder (2;117.1,117.2) schwenkbar sind.

10. Fahrbarer Rasenmäher nach Anspruch 3, dadurch gekennzeichnet, daß die Schneckenpresse (52,54;122, 123) ein in Förderrichtung konisch sich verengendes Schneckengehäuse (54;122) aufweist, in welchem eine in Förderrichtung konisch in ihrem Querschnitt sich verringernde Schnecke (52;123) angeordnet ist.
